(19) Europäisches Patentamt
European Patent Office
Office européen des brevets

(11) **EP 2 750 097 A1**

(12) **EUROPEAN PATENT APPLICATION**

(43) Date of publication:
**02.07.2014 Bulletin 2014/27**

(51) Int Cl.:
***G06Q 40/04*** *(2012.01)*

(21) Application number: **13173205.9**

(22) Date of filing: **21.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2012 IN MU37122012**

(71) Applicant: **Tata Consultancy Services Limited Mumbai, Maharashtra (IN)**

(72) Inventors:
• **Chellaboina, Vijaysekhar**
  **500081 Serilingampally Mandal, Madhapur, Hyderabad (IN)**

• **Subramanian, Easwara Naga**
  **500081 Serilingampally Mandal, Madhapur, Hyderabad (IN)**
• **Bhat, Sanjay Purushottam**
  **500081 Serilingampally Mandal, Madhapur, Hyderabad (IN)**

(74) Representative: **Jansen, Cornelis Marinus V.O.**
  **Johan de Wittlaan 7**
  **2517 JR Den Haag (NL)**

(54) **Globally optimum trading positions for multi-asset options**

(57) A trading position evaluation system (102) for evaluating trading positions that are globally optimum for a path-independent multi-asset European Contingent Claim (ECC) includes an option price determination module (216) configured to determine a current option price matrix, a shifted option price matrix, and a normalized conditional variance matrix associated with underlying assets of the ECC at a trading time instance amongst a plurality of trading time instances obtained from a trader, based on ECC data (110) and market data (114). Based on the current option price matrix, the shifted option price matrix, and the normalized conditional variance matrix, a position evaluation module (116) evaluates a trading position in each of the underlying assets at the trading time instance that minimizes global variance of profit and loss to the trader.

Fig. 2

**Description**

TECHNICAL FIELD

The present subject matter relates, in general, to a multi-asset path-independent European Contingent Claim and, in particular, to a system and a computer-implemented method for evaluating globally optimum trading positions for the multi-asset path-independent European Contingent Claim.

BACKGROUND

In today's competitive business environment, investment banks make profit by trading financial instruments, such as derivatives. A derivative is a contract between two parties, namely, a buyer and a seller. The seller of the contract is obligated to deliver to the buyer, a payoff that is contingent upon the performance of underlying assets. In one example, a derivative may be an option written on one or more underlying assets. The underlying assets may be a stock, a currency, or a commodity. In some derivatives, payoffs have to be delivered at a fixed time to maturity. Such derivatives are in general known as European Contingent Claims (ECC). The ECC may be a European call or put option. Further, the ECC may be a path-independent option, which means its payoff depends only on the prices of the underlying assets at the time of maturity. When the ECC is written on more than one underlying asset, it is a multi-asset ECC. An exchange option is an example of a multi-asset ECC written on two correlated underlying assets *(S1) and (S2)* whose payoff may be mathematically denoted by $H = max\ [0,\ S_T^1 - S_T^2]$, wherein *(H)* represents the payoff of the European call option and, $(S_T^1)$ and $(S_T^2)$ represents the prices of the underlying assets *(S1) and (S2)* respectively, at the time of maturity of the European call option.

Selling or buying an option always implies some exposure to financial risk. In case of the European call option, the holder of an option pays a premium to buy the underlying assets at a strike price at the time of maturity of the option. The strike price is the contracted price at which, the underlying assets can be purchased or sold at the time of maturity of the option. If the market prices of the underlying assets exceed the strike price, it is profitable for the holder of the option to buy the underlying assets from the option seller, and then sell the underlying assets at the market price to make a profit. Since the European call option provides to its buyer the right, but not the obligation to buy, the buyer may thus have a chance to make a potentially infinite profit at the cost of losing the amount which he has paid for the option, i.e., the premium. The seller, on the other hand, has an obligation to sell the underlying assets to the holder at the strike price, which may be less than the market price of the underlying assets on the date of maturity of the option. Therefore, for an option seller the amount at risk is potentially infinite due to the uncertain nature of the prices of the underlying assets. Thus, option sellers typically use various hedging strategies to minimize such risks.

SUMMARY

This summary is provided to introduce concepts related to evaluating globally optimum trading positions for multi-asset options. These concepts are further described below in the detailed description. This summary is not intended to identify essential features of the claimed subject matter nor is it intended for use in determining or limiting the scope of the claimed subject matter.

A trading position evaluation system for evaluating globally optimum trading positions for a path-independent multi-asset European Contingent Claim (ECC) includes an option price determination module configured to determine a current option price matrix, a shifted option price matrix, and a normalized conditional variance matrix associated with underlying assets of the ECC at a trading time instance amongst a plurality of trading time instances obtained from a trader, based on ECC data and market data. The ECC data comprises data associated with the ECC and the underlying assets of the ECC, and the market data comprises annualized covariance matrix associated with the underlying assets and risk-free interest rate of market. Based on the current option price matrix, the shifted option price matrix, and the normalized conditional variance matrix, a position evaluation module evaluates a trading position in each of the underlying assets at the trading time instance that minimizes global variance of profit and loss to the trader.

BRIEF DESCRIPTION OF THE DRAWINGS

The detailed description is described with reference to the accompanying figure(s). In the figure(s), the left-most digit(s) of a reference number identifies the figure in which the reference number first appears. The same numbers are used throughout the figure(s) to reference like features and components. Some embodiments of systems and/or methods in accordance with embodiments of the present subject matter are now described, by way of example only, and with reference to the accompanying figure(s), in which:

Fig. 1 illustrates a network environment implementing a trading position evaluation system, according to an embodiment of the present subject matter.

Fig. 2 illustrates components of the trading position evaluation system, according to an embodiment of the present subject matter.

Fig. 3 illustrates a method for evaluating trading positions that are globally optimum for a multi-asset path-independent European Contingent Claim (ECC), according to an embodiment of the present subject matter.

DETAILED DESCRIPTION

The trading of financial instruments, such as a path-independent ECC and other derivatives over computer networks, such as the Internet has become a common activity. Generally, any form of market trading involves a risk and so does the ECC trading. The risk to an ECC buyer is limited to the premium he has paid to an ECC seller. However, the risk to the ECC seller is potentially unlimited, while the profit earned by the ECC seller from the ECC sale alone is limited to the premiums earned. Accordingly, the ECC seller may hedge his risk by trading in the underlying assets of the ECC. The multiple underlying assets of the ECC are hereinafter referred to as underlying assets. The trading decisions taken by the ECC seller constitute the seller's hedging strategy. The net profit/loss incurred by the ECC seller at the time of maturity, from selling the ECC and the hedging process is called as the hedging error. The hedging error represents the ECC seller's risk that the ECC seller may incur even after hedging. A judicious choice of a hedging strategy by the ECC seller may lead to a lower residual risk.

Conventional hedging techniques are often postulated on unrealistic assumptions that trades can be made continuously in time. When such techniques are used in realistic settings involving multiple discrete trading time instances, they fail to provide trading positions that are globally optimum, i.e., the trading positions that minimize overall risk to a trader, for example the ECC seller in this case, at the time of maturity. Further, some existing techniques involve large number of parameters and complex calculations, thereby consuming lot of time and efforts and are prone to errors. Moreover, the conventional techniques fail to evaluate the trading positions for multi-asset options.

The present subject matter describes a system and a computer-implemented method for evaluating trading positions for a multi-asset path-independent European Contingent Claim (ECC). Such trading positions are evaluated at a plurality of discrete time instances starting from the time of initiation of the ECC till the time of maturity. Such trading positions provide minimum global variance of profit/loss to a trader, say, an ECC seller. The term global variance may be understood as variance of overall profit and loss to the trader starting from the time of initiation of the ECC till the time of maturity.

The calculation of variance requires a choice of probability measure. A probability measure provides the probability of occurrence of different financial events, and represents the quantification of a subjective view of the relative likelihoods of various future events/scenarios. Each market player may use a different probability measure reflecting his or her own subjective views. The collective subjective perception of all the market players is captured by the so-called market probability measure. Owing to the large number of market players and constantly changing subjective views, it is very difficult to characterize the market probability measure. An alternative is the risk-neutral probability measure (referred to as simply a risk-neutral measure hereinafter), which is conveniently characterized by the property that the expected rate of return of any market asset in the risk-neutral measure equals the risk-free interest rate offered by the economy. Moreover, as per the theory of asset pricing, the risk-neutral measure determines the prices of all derivative assets in the market.

The system and method, in accordance with the present subject matter, involves evaluating trading positions for a multi-asset path-independent ECC. The multi-asset path-independent ECC may be understood as ECC written on a plurality of underlying assets. Such a plurality of underlying assets is hereinafter referred to as underlying assets. The trading positions evaluated by the present system and method minimize the global variance of the profit and loss to a trader in the risk-neutral measure. The system as described herein is a trading position evaluation system.

Initially, a database for storing data associated with the multi-asset path-independent ECC is maintained according to one implementation. The database can be an external repository associated with the trading position evaluation system, or an internal repository within the trading position evaluation system. In the description hereinafter, a path-independent ECC is referred to as ECC, and the data associated with the path-independent ECC is referred to as ECC data. The ECC data may include the path-independent ECC defined by its payoff, time of initiation, time to maturity, premium, current market prices of a call and put option written on any one of the underlying assets of the ECC, prices of the underlying assets of the path-independent ECC which are collectively referred to as spot prices and individually referred as a spot price, and strike price of the call and put option. Time to maturity of the call and put option is same as that of the multi-asset ECC that is being hedged. In one example, the ECC data stored in the database may be obtained from the users, such as traders. In the above mentioned implementation, the database is further populated with historical data including historical market prices of the underlying assets of the ECC. The historical market prices for the underlying assets can be automatically obtained from a data source, such as National Stock Exchange (NSE) website at regular time intervals, for example, at the end of the day and stored into the database. The data stored in the database may be retrieved whenever the trading positions are to be evaluated. Further, the data contained within such database may be updated, whenever required. For example, new data may be added into the database, existing data can be modified, or non-useful data may be deleted from the database.

In one implementation, a covariance matrix associated with the underlying assets of the ECC is computed based on the historical data associated with the underlying assets. The covariance matrix may include variances and covariances of all the underlying assets. To compute the covariance matrix, historical market prices of the underlying assets for a pre-defined period, say, past two years, are retrieved from the database and log-returns are computed for the underlying assets based on the retrieved historical market prices. Thereafter, log-returns for each underlying asset are fitted to a best-fit distribution to obtain marginal density functions of the underlying assets. The marginal density functions are indicative of marginal distribution of the prices of the underlying assets. The best-fit distribution may be a Normal distribution, a Poisson distribution, a T-distribution, or any other known distribution that fits best to the log-returns.

The marginal density functions are then used to obtain cumulative distribution functions (CDFs) and inverse CDFs for each underlying asset. Each CDF thus obtained are used to generate a matrix of uniform random numbers. Each column of the matrix of uniform numbers corresponds to one underlying asset. Thereafter, a best-fit copula is found to capture the dependence structure between the columns of the matrix of uniform random numbers. The best fit copula may be a Gaussian copula, an Archemedian copula, or any other known copula that fits best to capture the dependence structure between the columns of the matrix of uniform random numbers. Subsequently, plurality of multivariate uniform random numbers is generated using the best-fit copula. Further, inverse CDFs are evaluated on the generated uniform random numbers to obtain a plurality of scenarios of all the underlying assets. The generated scenarios may include already existing scenarios that have occurred in the past and other scenarios that have not existed in the past but may have a likelihood of occurring in the future. The scenarios thus generated are fitted to a multivariate normal distribution to compute covariance matrix associated with the underlying assets of the ECC. The computed covariance matrix is thereafter annualized.

Further, a risk-free interest rate of the market is computed based upon the retrieved ECC data. The computed annualized covariance matrix and the risk-free interest rate are stored into the database as market data. The database thus contains the ECC data, the historical data, and the market data. The data contained in the database can be retrieved by the trading position evaluation system for the purpose of evaluating trading positions. In one implementation, the market data, such as annualized covariance matrix and risk-free interest rate can also be computed in real-time during evaluation of the trading position. The manner in which evaluation of trading position takes place is described henceforth.

A trader may provide a plurality of trading time instances starting from the time of initiation till the time of maturity of the ECC as an input to the trading position evaluation system for trading of the underlying assets. Such trading time instances are the discrete time instances at which the trader would like to trade the underlying assets of the ECC. Upon receiving trader's input, such as trading time instances, the trading position evaluation system retrieves the ECC data and the market data associated with the underlying assets from the database. For each of the trading time instances specified by the trader, the trading position evaluation system then evaluates a trading position for each of the underlying assets that provide minimum global variance of profit and loss to the trader.

To evaluate the trading position at a particular trading time instance, the trading position evaluation system determines a current option price matrix and a shifted option price matrix associated with the underlying assets based on the retrieved ECC data and the market data. Such a determination of the current option price matrix and the shifted option price matrix, in one implementation, may take place using a Black-Scholes pricing method or a Monte-Carlo pricing method. The trading position evaluation system further determines a normalized conditional variance matrix associated with the underlying assets. Subsequently, the trading positions in the underlying assets are evaluated based on the determined current option price matrix, the shifted option price matrix, and normalized conditional variance matrix. The trading position conveys to the trader of the ECC, the number of units of the underlying assets to be held by the trader of the ECC at a particular trading time instance until the next trading time instance.

Thus, the trading position evaluated at each of the specified trading time instances starting from the time of initiation of the ECC till the time to maturity when taken together allows the trader to achieve minimum variance of overall profit and loss to the trader, such as an ECC seller, at the time of maturity. As mentioned previously, such a variance of overall profit and loss from the time of initiation till the time of maturity is known as global variance. Thus, minimum global variance of profit and loss can be achieved by evaluating the trading positions at different trading time instances. Therefore, a possibility of risk incurred by the trader, especially, the ECC seller, at the time of maturity is minimized. The ECC seller, for example, may liquidate the underlying assets at the time of maturity in order to deliver the payoff to the ECC buyer at a minimum risk.

The system and the method according to the present subject matter realistically evaluates the trading positions using a simple analytical closed-form expression which is based on the current option price matrix, the shifted option price matrix, and the normalized conditional variance matrix, thereby reducing the computation complexity. The evaluated trading positions efficiently minimize risk exposure to the traders. Based on the trading positions, a trader would know how many units of the underlying assets should be held at each trading time instance so that the overall risk exposure to the trader at the time of maturity is minimized. Further, the system and the method can efficiently evaluate the trading positions for multiple assets.

The following disclosure describes system and method of evaluating the trading positions that are globally optimum for hedging the multi-asset ECC. While aspects of the described system and method can be implemented in any number of different computing systems, environments, and/or configurations, embodiments for the information extraction system are described in the context of the following exemplary system(s) and method(s).

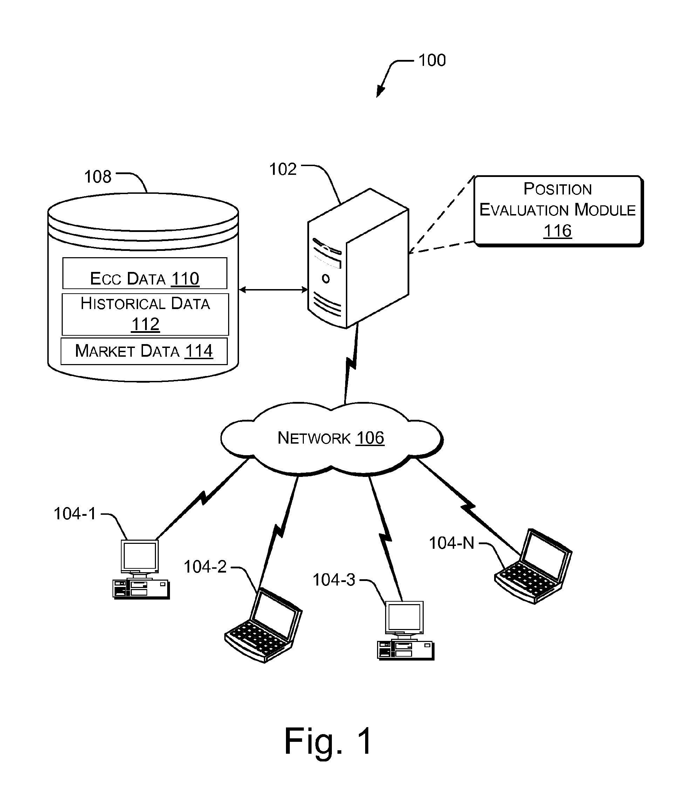

Fig. 1 illustrates a network environment 100 implementing a trading position evaluation system 102, in accordance with an embodiment of the present subject matter. In one implementation, the network environment 100 can be a public network environment, including thousands of personal computers, laptops, various servers, such as blade servers, and other computing devices. In another implementation, the network environment 100 can be a private network environment with a limited number of computing devices, such as personal computers, servers, laptops, and/or communication devices, such as mobile phones and smart phones.

The trading position evaluation system 102 is communicatively connected to a plurality of user devices 104-1, 104-2, 104-3...104-N, collectively referred to as user devices 104 and individually referred to as a user device 104, through a network 106. In one implementation, a plurality of users, such as traders may use the user devices 104 to communicate with the trading position evaluation system 102.

The trading position evaluation system 102 and the user devices 104 may be implemented in a variety of computing devices, including, servers, a desktop personal computer, a notebook or portable computer, a workstation, a mainframe computer, a laptop and/or communication device, such as mobile phones and smart phones. Further, in one implementation, the trading position evaluation system 102 may be a distributed or centralized network system in which different computing devices may host one or more of the hardware or software components of the trading position evaluation system 102.

The trading position evaluation system 102 may be connected to the user devices 104 over the network 106 through one or more communication links. The communication links between the trading position evaluation system 102 and the user devices 104 are enabled through a desired form of communication, for example, via dial-up modem connections, cable links, digital subscriber lines (DSL), wireless, or satellite links, or any other suitable form of communication.

The network 106 may be a wireless network, a wired network, or a combination thereof. The network 106 can also be an individual network or a collection of many such individual networks, interconnected with each other and functioning as a single large network, e.g., the Internet or an intranet. The network 106 can be implemented as one of the different types of networks, such as intranet, local area network (LAN), wide area network (WAN), the internet, and such. The network 106 may either be a dedicated network or a shared network, which represents an association of the different types of networks that use a variety of protocols, for example, Hypertext Transfer Protocol (HTTP), Transmission Control Protocol/Internet Protocol (TCP/IP), etc., to communicate with each other. Further, the network 106 may include network devices, such as network switches, hubs, routers, for providing a link between the trading position evaluation system 102 and the user devices 104. The network devices within the network 106 may interact with the trading position evaluation system 102, and the user devices 104 through the communication links.

The network environment 100 further comprises a database 108 communicatively coupled to the trading position evaluation system 102. The database 108 may store all data inclusive of data associated with an ECC and its underlying assets sold by a trader, interchangeably referred to as an ECC seller in the present description. For example, the database 108 may store an ECC data 110, a historical data 112, and a market data 114. As indicated previously, the ECC data 110 include, but is not limited to, a path-independent ECC defined by its payoff, time of initiation, time to maturity, premium, current market prices of a call and put option written on any one of the underlying assets of the ECC, spot prices of the underlying assets, and strike price of the call and put option. Time to maturity of the call and put option is same as that of the multi-asset ECC that is being hedged. The historical data 112 includes historical market prices of the underlying assets of the ECC, and the market data 114 includes annualized covariance matrix and risk-free interest rate.

Although the database 108 is shown external to the trading position evaluation system 102, it will be appreciated by a person skilled in the art that the database 108 can also be implemented internal to the trading position evaluation system 102, wherein the ECC data 110, the historical data 112, and the market data 114 may be stored within a memory component of the trading position evaluation system 102.

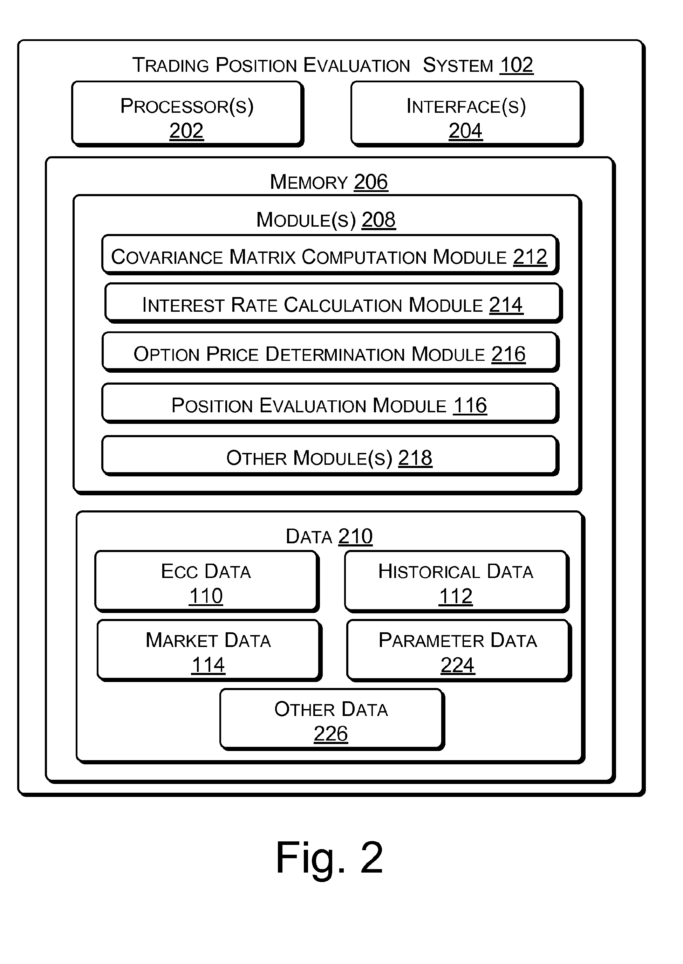

According to an implementation of the present subject matter, the trading position evaluation system 102 includes a position evaluation module 116 that retrieves the ECC data 110 and the market data 114 from the database 108 and evaluates trading positions in each of the underlying assets at a plurality of trading time instances. The position evaluation module 116 evaluates the trading positions based on a current option price matrix, a shifted option price matrix, and a normalized conditional variance matrix associated with the underlying assets. The above mentioned matrices are determined at each trading time instance. The trading positions evaluated by the trading position evaluation system 102 are globally optimum in the risk-neutral measure. Such trading positions are interchangeably referred to as globally optimum trading positions. The trading positions are indicative of the number of units of the underlying assets to be held by the seller of the ECC from a particular trading time instance until the next trading time instance. Such trading position minimizes overall risk to the seller starting from the time of initiation till the time of maturity of the ECC. The manner in which the trading position evaluation system 102 evaluates the trading positions is explained in greater detail according to the Fig. 2.

Fig. 2 illustrates various components of the trading position evaluation system 102, according to an embodiment of the present subject matter.

In said embodiment, the trading position evaluation system 102 includes one or more processor(s) 202, a memory 206 coupled to the processor(s) 202, and interface(s) 204. The processor(s) 202 may be implemented as one or more microprocessors, microcomputers, microcontrollers, digital signal processors, central processing units, state machines, logic circuitries, and/or any devices that manipulate signals based on operational instructions. Among other capabilities, the processor(s) 202 are configured to fetch and execute computer-readable instructions and data stored in the memory 206.

The interface(s) 204 may include a variety of software and hardware interfaces, for example, the interface(s) 204 may enable the trading position evaluation system 102 to communicate over the network 106, and may include one or more interface for peripheral device(s), such as a keyboard, a mouse, an external memory, a printer, etc. Further, the interface(s) 204 may include ports for connecting the trading position evaluation system 102 with other computing devices, such as web servers and external databases. The interface(s) 204 may facilitate multiple communications within a wide variety of protocols and networks, such as a network, including wired networks, e.g., LAN, cable, etc., and wireless networks, e.g., WLAN, satellite, etc.

The memory 206 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The trading position evaluation system 102 also includes module(s) 208 and data 210.

The module(s) 208 include routines, programs, objects, components, data structures, etc., which perform particular tasks or implement particular abstract data types. The module(s) 208 further include, in addition to the position evaluation module 116, a covariance matrix computation module 212, an interest rate calculation module 214, an option price determination module 216, and other module(s) 218.

The data 210 serves, amongst other things, as a repository for storing data processed, received and generated by one or more of the modules 208. The data 210 includes the ECC data 110, the historical data 112, and the market data 114, parameter data 224, and other data 226. The ECC data 110 contains an ECC defined by its payoff, time of initiation, time to maturity of the ECC, its premium, current market prices of the call and put option written on any of the underlying assets of the ECC, spot prices, and strike price of the call and put option. The historical data 112 includes historical market prices of the underlying assets of the ECC. The market data 114 includes annualized covariance matrix and risk-free interest rate. The parameter data 224 includes a current option price matrix, a shifted option price matrix, and a normalized conditional variance matrix. The other data 226 includes data generated as a result of the execution of one or more other modules 218.

In the present embodiment, the ECC data 110, the historical data 112, and the market data 114 are depicted to be stored within the data 210, which is a repository internal to the trading position evaluation system 102. However, as described in the previous embodiment, the ECC data 110, the historical data 112, and the market data 114 may also be stored in the database 108 that is external to the trading position evaluation system 102.

According to the present subject matter, the covariance matrix computation module 212 retrieves historical data 112 for a predefined period, for example, past one year, from the data 210. As described previously, the historical data 112 includes historical market prices of the underlying assets. Based on the retrieved historical data 112, the covariance matrix computation module 212 computes log-returns of the underlying assets. In one implementation, covariance matrix computation module 212 computes the log-returns using the equation (1) provided below:

$$R_j^i \quad = log\ \frac{S_{j+1}^i}{S_j^i}, \quad i \in \{1,\dots,p\}, j \in \{1,\dots,m\} \qquad \dots. (1)$$

*wherein,*

$R_j^i$ *represents the log-return of the $i_{th}$ underlying asset for the $j_{th}$ period,*

$S_j^i$ *represents the historical market price of the $i_{th}$ underlying asset for the $j_{th}$ period,*

*p represents the number of underlying assets of the ECC, and*
*m represents a part of the historical data 112.*

Subsequent to computing the log-returns, the covariance matrix computation module 212 is configured to fit the log-returns for each underlying asset to a best-fit distribution to obtain marginal density functions of the underlying assets. The best-fit distribution may be a Normal distribution, a Poisson distribution, a T-distribution, or any other known distribution that fits best to the log-returns. The marginal density functions are then used by the covariance matrix computation module 212 to obtain cumulative distribution functions (CDFs) and inverse CDFs for each underlying asset. Each CDF thus obtained, are used to generate a matrix of uniform random numbers with each column corresponding to one underlying asset amongst the underlying assets, based on the respective log-returns. Thereafter, a best-fit copula is found to capture the dependence structure between the columns of the matrix of uniform random numbers. The best-fit copula may be a Gaussian copula, an Archemedian copula, or any other known copula that fits best to capture the dependence structure between the columns of the matrix of uniform random numbers.

In one implementation, the covariance matrix computation module 212 further generates a plurality of multivariate uniform random numbers using the best-fit copula. Further, inverse CDFs are evaluated on the generated uniform random numbers to obtain a plurality of scenarios of all the underlying assets. The generated scenarios may include already existing scenarios that have occurred in the past and other scenarios that have not existed in the past but may have a likelihood of occurring in the future.

The covariance matrix computation module 212 then fits the generated scenarios to a multivariate normal distribution to compute covariance matrix associated with the underlying assets of the ECC. The covariance matrix is a symmetric matrix. The computed covariance matrix is thereafter annualized. For example, if an ECC is written on two underlying assets i and j, then the covariance matrix associated with these two underlying assets are mathematically represented by the expression provided below:

$$B_{2,2} = \begin{pmatrix} \sigma_{1,1} & \sigma_{1,2} \\ \sigma_{2,1} & \sigma_{2,2} \end{pmatrix} \qquad \dots (2)$$

In the above expression, ($B_{2,2}$) represents the covariance matrix for two underlying assets and ($\sigma_{i,j}$) represents covariance between the underlying assets i and j, wherein i, j $\in$ {1,2}. In general, the annualized covariance matrix may be denoted by *(B)*. Further, the diagonal elements of the annualized covariance matrix *(B)* represent the variance of the underlying assets and off-diagonal elements represent the covariance between the underlying assets. In said example, if the element ($\sigma_{i,j}$) of the matrix ($B_{2,2}$) is positive, then the underlying assets i and j are positively correlated. Further, if the element ($\sigma_{i,j}$) is 0, there is no correlation between the underlying assets. If the element ($\sigma_{i,j}$) is negative, then the underlying assets are negatively correlated. As indicated earlier, the covariance matrix is a symmetric matrix, therefore, element ($\sigma_{i,j}$) is equal to the element ($\sigma_{j,i}$).

Further, the interest rate calculation module 214 of the trading position evaluation system 102 is configured to retrieve the ECC data 110 and compute the risk-free interest rate of the market based on the retrieved ECC data 110. According to one implementation, the interest rate calculation module 214 computes the risk-free interest rate using the equation (3) provided below:

$$r = \frac{1}{T} ln \frac{K}{U_0 - C + P} \qquad \dots (3)$$

*wherein,*

*r represents the risk-free interest rate,*
*C and P represent the current market prices of call and put option written on any one of the underlying assets of the ECC,*
*K represents the strike price of the call and put option ,*

*T represents the time to maturity, and*
$U_0$ *represents the spot price of the underlying asset of the call and put option.*

The annualized covariance matrix *(B)* and risk-free interest rate *(r)* are stored as the market data 114 and can be retrieved by the trading position evaluation system 102 while evaluating the trading positions. Alternatively, the annualized covariance matrix *(B)* and risk-free interest rate *(r)* may be computed in real-time during evaluation of the trading positions. The manner in which the trading position evaluation system 102 evaluates the trading positions is described henceforth.

The trading position evaluation system 102 receives a plurality of trading time instances from a trader, starting from the time of initialization till the time to maturity of the ECC. The trading time instances are the time instances at which the trader would like to trade. In the context of the present subject matter, the trading time instances are mathematically represented by the expression (4).

$$\{T_0, \ T_1, \dots\dots, T_n\} \qquad\qquad \dots (4)$$

In the above equation, *($T_0$)* represents the first trading time instance, which is also referred to as time of initiation, and *($T_n$)*, represents last trading time instance, which is also referred to as time of maturity.

At each of the trading time instances, the option price determination module 216 determines a current option price matrix, a shifted option price matrix, and a normalized conditional variance matrix associated with the underlying assets. The current option price matrix, the shifted option price matrix, and the normalized conditional variance matrix are determined based on the ECC data 110 and the market data 114. In one implementation, the option price determination module 216 determines the normalized conditional variance matrix associated with the underlying assets using the equation (5).

$$\Gamma = expH\{\delta_i BB^T\} - 11^T, i$$
$$\in \{1, \dots\dots, n\} \qquad\qquad \dots (5)$$

*wherein,*

$\Gamma$ *represents the normalized conditional variance matrix,*
$\delta_i$ *is the time difference between two consecutive trading time instances,*
*B represents the annualized covariance matrix,*
$B^T$ *represents transpose of the annualized covariance matrix,*
*expH (.) represents a Hadamard exponential of a matrix, and*

$11^T$ *represents the n\* n matrix* $\begin{pmatrix} 1,..,1 \\ \vdots \\ 1,..,1 \end{pmatrix}$.

In one example, the current option price matrix and the shifted option price matrix may be determined based on a Black-Scholes pricing method or a Monte-Carlo pricing method. In one implementation for a European call option, the option price determination module 216 determines the current option price matrix using the equations (6) provided below.

$$V_{i-1} = \begin{pmatrix} V(T_{i-1}, [1 \bullet S_{i-1}]^T) \\ \vdots \\ V(T_{i-1}, [1 \bullet S_{i-1}]^T) \end{pmatrix}, i$$

$$\in \{1, \ldots \ldots, n\} \qquad \qquad \ldots (6)$$

wherein,

$V_{i-1}$ represents current option price matrix consisting of current option prices evaluated at trading time $T_{i-1}$,
$T_{i-1}$ represents trading time instances,
$S_{i-1}$ is a matrix that represents the prices of all underlying assets at $T_{i-1}$, and
$\bullet$ in $[1 \bullet S_{i-1}]^T$ represents Hadamard product between the two matrices

In an example, for the exchange option written on two underlying assets, the current option price of the underlying assets are determined by the option price determination module 216 using the equation (7), (8), and (9) provided below.

$$V_{i-1} = \begin{pmatrix} S_{i-1}^1 N(d_1) - S_{i-1}^2 e^{-r(T_n - T_{i-1})} N(d_2) \\ S_{i-1}^1 N(d_1) - S_{i-1}^2 e^{-r(T_n - T_{i-1})} N(d_2) \end{pmatrix}, \quad i \in \{1, \ldots \ldots, n\} \ldots (7)$$

wherein,

$$d_1 = \frac{ln\left(\frac{S_{i-1}^1}{S_{i-1}^2}\right) + \left(r + \frac{\sigma^2}{2}\right)(T_n - T_{i-1})}{\sigma\sqrt{(T_n - T_{i-1})}}, \quad i \in \{1, \ldots \ldots, n\} \qquad \ldots (8)$$

$$d_2 = \frac{ln\left(\frac{S_{i-1}^1}{S_{i-1}^2}\right) + \left(r - \frac{\sigma^2}{2}\right)(T_n - T_{i-1})}{\sigma\sqrt{(T_n - T_{i-1})}}, \quad i \in \{1, \ldots \ldots, n\} \qquad \ldots (9)$$

wherein,

$V_{i-1}$ represents current option price matrix,
$T_n$ and $T_{i-1}$ represents trading time instances,

$S_{i-1}^1$ represents the price of 1st underlying asset of exchange option at $T_{i-1}$,

$S_{i-1}^2$ represents the price of 2nd underlying asset of exchange option at $T_{i-1}$,

$r$ represents the risk-free interest rate, and
$N(d_1)$ and $N(d_2)$ represents cumulative distribution function of intermediate terms $d_1$ and $d_2$.

In the said example, the term $(\sigma)$ is mathematically represented by the expression (10).

$$\sigma = \sqrt{\sigma_{1,1}^2 + \sigma_{2,2}^2 - 2\rho\sigma_{1,1}\sigma_{2,2}} \qquad \dots \text{(10)}$$

wherein, $\sigma_{1,1}$ represents volatility of the 1st underlying asset of exchange option, $\sigma_{2,2}$ represents volatility of the 2nd underlying asset of exchange option, and $\rho$ represents the correlation co-efficient computed as $\rho = \dfrac{\sigma_{1,2}}{\sigma_{1,1}\times\sigma_{2,2}}$ .

In one implementation, the option price determination module 216 determines the shifted option price matrix associated with the underlying assets using the equation (11) provided below.

$$V_{i-1}^{sh} = \begin{pmatrix} V(T_{i-1}, [\zeta_1 \bullet S_{i-1}]^T) \\ \vdots \\ V\left(T_{i-1}, [\zeta_p \bullet S_{i-1}]^T\right) \end{pmatrix} \qquad \dots \text{(11)}$$

wherein,

$V_{i-1}^{sh}$ represents shifted option price matrix consisting of shifting option prices evaluated at trading time $T_{i-1}$,

$\zeta_J$ represents the $j^{th}$ column of p X p matrix $\exp H(\delta_i BB^T)$, where $j \in \{1, \dots, p\}$,

$\bullet$ in $[\zeta_1 \bullet S_{i-1}]^T$ represents Hadamard product between the two matrices, $T_{i-1}$ represents trading time instances, and $S_{i-1}$ is a matrix that represents the prices of the underlying assets at $T_{i-1}$.

In an example, for the exchange option written on two underlying assets, the current option price of the underlying assets are determined by the option price determination module 216 determines the shifted option price of the underlying assets using the equation (12) provided below.

$$V_{i-1}^{sh}$$
$$= \begin{pmatrix} e\left(\delta_i(\sigma_{1,1}^2 + \sigma_{1,2}^2)\right) S_{i-1}^1 N(d_1) - e\left(\delta_i(\sigma_{2,1}\sigma_{1,1} + \sigma_{2,2}\sigma_{1,2})\right) S_{i-1}^2 e^{-r(T_n - T_{i-1})} N(d_2) \\ e\left(\delta_i(\sigma_{1,1}\sigma_{2,1} + \sigma_{1,2}\sigma_{2,2})\right) S_{i-1}^1 N(d_1) - e\left(\delta_i(\sigma_{1,1}^2 + \sigma_{1,2}^2)\right) S_{i-1}^2 e^{-r(T_n - T_{i-1})} N(d_2) \end{pmatrix},$$
$$i \in \{1, \dots, n\} \qquad \dots \text{(12)}$$

wherein, $d_1$ and $d_2$ are calculated using the equations (8) and (9) provided above with $S_{i-1}^1$ replaced by

$e\left(\delta_i(\sigma_{1,1}^2 + \sigma_{1,2}^2)\right) S_{i-1}^1$ and $S_{i-1}^2$ replaced by $e\left(\delta_i(\sigma_{2,1}\sigma_{1,1} + \sigma_{2,2}\sigma_{1,2})\right) S_{i-1}^2$ for the $d_1$ and $d_2$ in the

first row of equation (12). Similarly, $S_{i-1}^1$ replaced by $e\left(\delta_i(\sigma_{1,1}\sigma_{2,1} + \sigma_{1,2}\sigma_{2,2})\right) S_{i-1}^1$ and $S_{i-1}^2$ replaced by

$e\left(\delta_i(\sigma_{1,1}^2 + \sigma_{1,2}^2)\right) S_{i-1}^2$ for $d_1$ and $d_2$ in the second row of equation (12).

The current option price matrix, the shifted option price matrix, and the normalized conditional variance matrix computed by the option price determination module 216 may be stored as the parameter data 224 within the trading position evaluation system 102.

Based on the current option price matrix, the shifted option price matrix, and the normalized conditional variance matrix, the position evaluation module 116 of the trading position evaluation system 102 is configured to evaluate a trading position for each of the underlying assets at each trading time instance. The trading positions, thus, evaluated are globally optimum in the risk-neutral measure. As indicated earlier, the trading positions conveys to the trader, the number of units of the underlying assets to be held until the next trading time instance. Thus, the trading positions evaluated at each of the trading time instances, starting from the time of initialization of the ECC till the time to maturity, when taken together, allows the seller to achieve minimum global variance of profit and loss at the time of maturity. The position evaluation module 116 is configured to compute the trading position at a particular trading time instance using the equation (13) provided below.

$$\Delta_i^* = S_{i-1}^{-H} \bullet \left\{ \Gamma^{-1}(V_{i-1}^{sh} - V_{i-1}) \right\} \qquad , \qquad i \in \{1, \ldots, n\} \qquad \ldots (13)$$

*wherein*

$\Delta_i^*$ *represents trading position that are globally optimum in a risk-neutral measure at (i-1)$^{th}$ trading time instance,*

$V_{i-1}^{sh}$ *represents shifted current option price matrix associated with the underlying assets,*

$S_{i-1}$ *represents matrix of the current market price of the underlying assets,*

$\Gamma^{-1}$ *represents inverse of the normalized conditional variance matrix* $\Gamma$,

$S_{i-1}^{-H}$ *represents Hadamard inverse of matrix $S_{i-1}$, where the matrix is associated with the price of the underlying assets, and*

$V_{i-1}$ *represents current option price matrix associated with the underlying assets.*

The position evaluation module 116 evaluates the trading positions for the underlying assets at each trading time instance. At the time of maturity, the trader liquidates the computed trading positions and delivers the payoff to the buyer. Taking an example of an Exchange option, the trading position in each of the two underlying assets is evaluated at a particular trading time instance $T_{i-1}$ using the equation (14) provided below.

$$\Delta_i^* = \begin{pmatrix} \Delta_{i,1}^* \\ \Delta_{i,2}^* \end{pmatrix} = S_{i-1}^{-H} \bullet \Gamma^{-1}(V_{i-1}^{sh} - V_{i-1}) \ , \quad i \in \{1, \ldots, n\} \qquad \ldots (14)$$

*wherein,*

$\Delta_i^*$ *represents trading positions in two underlying assets 1 and 2 at (i-1)$^{th}$ trading time instance,*

$V_{i-1}^{sh}$ *represents shifted current option price matrix associated with the underlying assets,*

$S_{i-1}^{-H}$ *represents Hadamard inverse of matrix $S_{i-1}$, where the matrix is associated with the price of the underlying assets,*

$\Gamma^{-1}$ *represents inverse of the normalized conditional variance matrix* $\Gamma$, *and*

$V_{i-1}$ *represents current option price matrix associated with the underlying assets.*

In the said example, a seller of the Exchange option gets premium (β) from the buyer and purchases $\Delta_{1,1}^*$ units of the underlying asset $(S^1)$ at price $\left(S_0^1\right)$ and $\Delta_{1,2}^*$ units of the underlying asset $(S^2)$ at price $\left(S_0^2\right)$ at trading time instance $(T_0)$. Thereafter, at trading time instance $(T_1)$, the seller sells $\Delta_{1,1}^*$ units of the underlying asset $(S^1)$ and $\Delta_{1,2}^*$ units of the underlying asset $(S^2)$ at price $\left(S_1^1\right)$ and $\left(S_1^2\right)$ respectively and repurchases $\Delta_{2,1}^*$ units of the underlying asset $(S^1)$ and $\Delta_{2,2}^*$ units of the underlying asset $(S^2)$ at prices $\left(S_1^1\right)$ and $\left(S_1^2\right)$ respectively and this continues till the time to maturity $(T_n)$. The seller then, at the time of maturity $(T_n)$ liquates the positions, i.e., $\Delta_{n,1}^*$ units of the underlying asset $(S^1)$ and $\Delta_{n,2}^*$ units of the underlying asset $(S^2)$ at prices $\left(S_n^1\right)$ and $\left(S_n^2\right)$ and delivers the payoff $(H)$ to the buyer of the ECC. Thus, according to the present subject matter, the trading positions that are globally optimum in the risk-neutral measure are evaluated by using a simple analytical closed-form expression, i.e., the equation (13).

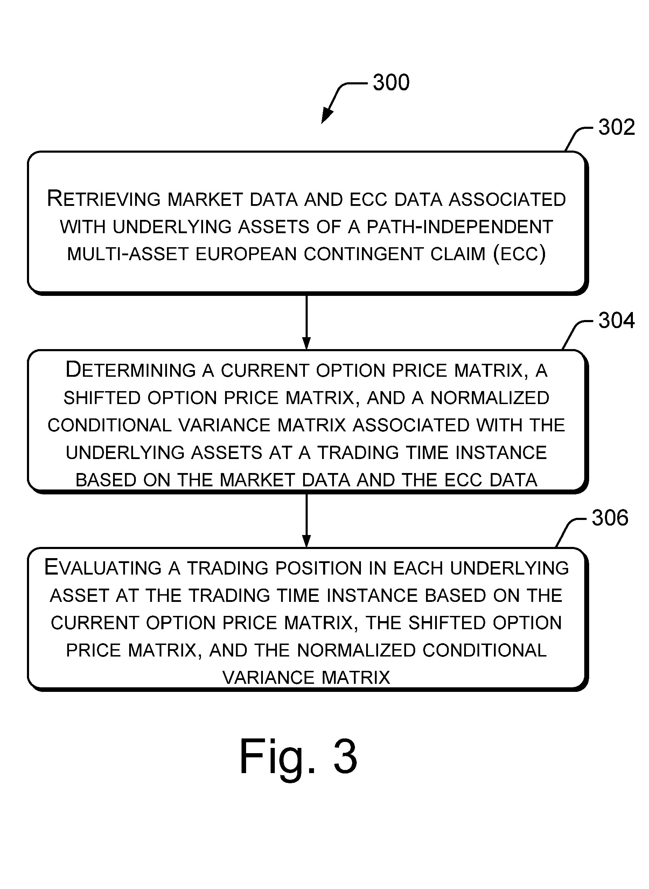

Fig. 3 illustrates a method 300 for evaluating the trading positions for a multi-asset path-independent European Contingent Claim (ECC), in accordance to an embodiment of the present subject matter. The method 300 is implemented in computing device, such as a trading position evaluation system 102. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network.

The order in which the method is described is not intended to be construed as a limitation, and any number of the described method blocks can be combined in any order to implement the method, or an alternative method. Furthermore, the method can be implemented in any suitable hardware, software, firmware or combination thereof.

At block 302, the method 300 includes retrieving ECC data 110 and market data 114 associated underlying assets of a path-independent ECC. The ECC data 110 may include the data associated with the ECC, such as its payoff $(H)$, time of initiation $(T_0)$, time to maturity $(T_n)$, premium $(\beta)$, current market prices of call and put option written on any one of the underlying assets of the ECC, spot prices, and strike price $(K)$ of the call and put option. The market data 114 includes the annualized covariance matrix $(B)$ associated with the underlying assets and the risk-free interest rate $(r)$ of the market.

At block 304 of the method 300, a current option price matrix, a shifted option price matrix, and a normalized conditional variance matrix associated with the underlying assets are determined. The current option price matrix, the shifted option price matrix, and the normalized conditional variance matrix are determined at a trading time instance based on the ECC data 110 and the market data 114. The trading time instance is provided by a trader of the ECC. In accordance with one implementation of the present subject matter, the option price determination module 216 determines the current option price matrix, the shifted option price matrix, and the normalized conditional variance matrix associated with the underlying assets based on equation (5), (6), and (11) described in the previous section.

At block 306 of the method 300, a trading position in each underlying asset at the trading time instance is evaluated based on the current option price matrix, the shifted option price matrix, and the normalized conditional variance matrix. The evaluated trading position is globally optimum in a risk-neutral measure. Such a trading position is also referred as globally optimum trading position in the present description. In one implementation, the position evaluation module 116 evaluates the globally optimum trading positions of the underlying assets based on the equation (13) described in the previous section.

The method blocks described above are repeated at each of the plurality of trading time instance provided by the trader to evaluate the trading positions at each trading time instance. At the last trading time instance, the trader such as the seller of the ECC liquidates the underlying assets and delivers the payoff to the buyer in order to minimize the global variance of profit and loss at the time of maturity of the ECC.

Although embodiments for methods and systems for evaluating trading positions that are globally optimum for the multi-asset ECC have been described in a language specific to structural features and/or methods, it is to be understood that the invention is not necessarily limited to the specific features or methods described. Rather, the specific features and methods are disclosed as exemplary embodiments for evaluating the globally optimum trading positions for multi-asset ECC.

**Claims**

1. A trading position evaluation system (102) comprising:

   a processor (202);
   an option price determination module (216) coupled to the processor (202), the option price determination module (216) configured to determine a current option price matrix, a shifted option price matrix, and a normalized conditional variance matrix associated with underlying assets of a path-independent multi-asset European Contingent Claim (ECC), at a trading time instance amongst a plurality of trading time instances obtained from a trader, based on ECC data (110) and market data (114),
   wherein the ECC data (110) comprises data associated with the ECC and the underlying assets, and the market data (114) comprises annualized covariance matrix associated with the underlying assets and risk-free interest rate of market; and
   a position evaluation module (116) configured to evaluate a trading position in each of the underlying assets at the trading time instance based on the current option price matrix, the shifted option price matrix, and the normalized conditional variance matrix, wherein the trading position minimizes global variance of profit and loss to the trader.

2. The trading position evaluation system (102) as claimed in claim 1 further comprising a covariance matrix computation module (212) is configured to:

retrieve historical data (112) of the underlying assets, wherein the historical data (112) comprises historical market prices of the underlying assets;
calculate log-returns of the underlying assets based on the historical data (112);
determine marginal density functions of the underlying assets based on fitting the log-returns for each underlying asset to a best-fit distribution;
obtain cumulative distribution functions (CDFs) and inverse CDFs for each underlying asset based on the marginal density function;
compute a matrix of uniform random numbers based on the CDFs;
identify a best-fit copula to capture the dependence structure in the matrix of uniform random numbers;
generate a plurality of multivariate uniform numbers using the best-fit copula;
evaluate inverse CDFs on the generated multivariate uniform numbers to obtain a plurality of scenarios,
fit the plurality of scenarios to a multivariate normal distribution to compute covariance matrix associated with the underlying assets; and
annualize the covariance matrix to obtain the annualized covariance matrix.

3. The trading position evaluation system (102) as claimed in claim 1, wherein the ECC data (110) comprises time of initiation of the ECC, time to maturity of the ECC, premium, current market price of the call and put option written on any one of the underlying assets of the ECC, spot prices of the underlying assets, and strike price of the call and put option.

4. The trading position evaluation system (102) as claimed in claim 1 further comprising an interest rate calculation module (214) configured to calculate the risk-free interest rate based on the ECC data (110).

5. The trading position evaluation system (102) as claimed in claim 2, wherein the best-fit distribution is any one of a Normal distribution, a Poisson distribution, and a T-distribution.

6. The trading position evaluation system (102) as claimed in claim 2, wherein the best-fit copula is any one of a Gaussian copula and an Archemedian copula.

7. A computer-implemented method for evaluating trading positions that are globally optimum for a multi-asset European Contingent Claim (ECC), wherein the method comprising:

receiving a plurality of trading time instances from a trader;
retrieving ECC data (110) and market data (114) associated with a path-independent multi-asset European Contingent Claim (ECC) from a database (108), wherein the ECC data (110) comprises data associated with the ECC and underlying assets of the ECC, and the market data (114) comprises annualized covariance matrix associated with the underlying assets and risk-free interest rate of market;
computing a current option price matrix, a shifted option price matrix, and a normalized conditional matrix associated with the underlying assets at each of the plurality trading time instances based on the ECC data (110) and the market data (114); and
evaluating a trading position in each of the underlying assets at each of the plurality of trading time instances based on the current option price matrix, the shifted option price matrix and the normalized conditional matrix, wherein the trading position minimizes global variance of profit and loss to the trader.

8. The method as claimed in claim 7 further comprising:

retrieving historical data (112) for a predefined period from the database (108);
calculating log-returns of the underlying assets based on the historical data (112);
determining marginal density function of the underlying assets based on fitting the log-returns for each underlying asset to a best-fit distribution;
obtaining cumulative distribution functions (CDFs) and inverse CDFs for each underlying asset based on the marginal density function;
computing a matrix of uniform random numbers based on the CDFs;

identifying a best-fit copula to capture the dependence structure in the matrix of uniform random numbers;
generating a plurality of multivariate uniform numbers using the best-fit copula;
evaluating inverse CDFs on the generated multivariate uniform numbers to obtain a plurality of scenarios,
fitting the plurality of scenarios to a multivariate normal distribution to compute covariance matrix associated with the underlying assets; and
annualizing the covariance matrix to obtain the annualized covariance matrix.

9. The method as claimed in claim 7, wherein the ECC data (110) comprises time of initiation of the ECC, time to maturity of the ECC, premium, current market price of the call and put option written on any one of the underlying assets of the ECC, spot prices of the underlying assets, and strike price of the call and put option.

10. The method as claimed in claim 7 further comprising calculating the risk-free interest rate based on the ECC data (110).

11. The method as claimed in claim 8, wherein the historical data (112) comprises historical market prices of the underlying assets obtained from a data source.

12. A non-transitory computer-readable medium having embodied thereon a computer program for executing a method comprising:

receiving a plurality of trading time instances from a trader;
retrieving ECC data (110) and market data (114) associated with a path-independent multi-asset European Contingent Claim (ECC) from a database (108), wherein the ECC data (110) comprises data associated with the ECC and underlying assets of the ECC, and the market data (114) comprises annualized covariance matrix associated with the underlying assets and risk-free interest rate of market;
computing a current option price matrix, a shifted option price matrix, and a normalized conditional matrix associated with the underlying assets at each of the plurality trading time instances based on the ECC data (110) and the market data (114); and
evaluating a trading position in each of the underlying assets at each of the plurality of trading time instances based on the current option price matrix, the shifted option price matrix, and a normalized conditional variance matrix, wherein the trading position minimizes global variance of profit and loss to the trader.

Fig. 1

TRADING POSITION EVALUATION SYSTEM 102

PROCESSOR(S)
202

INTERFACE(S)
204

MEMORY 206

MODULE(S) 208

COVARIANCE MATRIX COMPUTATION MODULE 212

INTEREST RATE CALCULATION MODULE 214

OPTION PRICE DETERMINATION MODULE 216

POSITION EVALUATION MODULE 116

OTHER MODULE(S) 218

DATA 210

ECC DATA
110

HISTORICAL DATA
112

MARKET DATA
114

PARAMETER DATA
224

OTHER DATA
226

# Fig. 2

300

302

RETRIEVING MARKET DATA AND ECC DATA ASSOCIATED WITH UNDERLYING ASSETS OF A PATH-INDEPENDENT MULTI-ASSET EUROPEAN CONTINGENT CLAIM (ECC)

304

DETERMINING A CURRENT OPTION PRICE MATRIX, A SHIFTED OPTION PRICE MATRIX, AND A NORMALIZED CONDITIONAL VARIANCE MATRIX ASSOCIATED WITH THE UNDERLYING ASSETS AT A TRADING TIME INSTANCE BASED ON THE MARKET DATA AND THE ECC DATA

306

EVALUATING A TRADING POSITION IN EACH UNDERLYING ASSET AT THE TRADING TIME INSTANCE BASED ON THE CURRENT OPTION PRICE MATRIX, THE SHIFTED OPTION PRICE MATRIX, AND THE NORMALIZED CONDITIONAL VARIANCE MATRIX

# Fig. 3

Europäisches
Patentamt

European
Patent Office

Office européen
des brevets

## EUROPEAN SEARCH REPORT

Application Number

EP 13 17 3205

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods (OJ 11/2007; p592f) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-12 | INV. G06Q40/04 |

**TECHNICAL FIELDS SEARCHED (IPC)**

G06Q

The present search report has been drawn up for all claims

| Place of search | Date of completion of the search | Examiner |
|---|---|---|
| The Hague | 17 February 2014 | Tiago Pinheiro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .......................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 13 17 3205

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |

TECHNICAL FIELDS
SEARCHED        (IPC)

The present search report has been drawn up for all claims

| Place of search | Date of completion of the search | Examiner |
|---|---|---|
| The Hague | 17 February 2014 | Tiago Pinheiro |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)